# EUROPÄISCHE PATENTSCHRIFT

(11) **EP 2 144 017 B1**
(45) Veröffentlichungstag und Bekanntmachung des Hinweises auf die Patenterteilung: **16.05.2012**
(21) Anmeldenummer: 09008916.0
(22) Anmeldetag: 08.07.2009
(51) Int. Cl.: F24J 3/08

(54) **Verfahren zum Einbau von Erdkollektoren**
Method of installing a collector in the soil
Procédée d'installation d'un collecteur dans un sol

(30) Priorität: 08.07.2008 DE 102008031891
(43) Veröffentlichungstag der Anmeldung: 13.01.2010
(73) Patentinhaber: WQ-Tec AG, 4142 Münchenstein (CH)
(72) Erfinder: Karsch, Hans-Ulrich, 96271 Grub am Forst (DE); Steinhäuser, Harry, 96191 Viereth-Trunstadt (DE)
(74) Vertreter: Koch Müller Patentanwaltsgesellschaft mbH

(56) Entgegenhaltungen:
- DE-A1-102006 061 065

## Beschreibung

Die vorliegende Erfindung betrifft ein Verfahren zum Einbau von Erdkollektoren.

Um Erdwärme für Wärmepumpen nutzen zu können, werden Kollektoren eingesetzt, die aus einer im Erdreich verlegten Leitung für einen Wärmeträger bestehen. Über den Wärmeträger wird dem Erdreich Wärme entzogen, und kann der Wärmepumpe zugeführt werden.

Erdkollektoren sind in verschiednen Bauformen bekannt. Aus der DE 31 14 262 A1 ist ein Erdkollektor mit sternstrahlenförmig verlegten Erdsonden bekannt, die eine Länge von 12m bis 50m aufweisen und tief in das Erdreich eingebracht werden.

Weiterhin sind flächige Erdkollektoren bekannt, bei denen die Kollektorleitung innerhalb einer vorgegebenen Kollektorfläche verlegt ist.

Aus der AT 378 260 ein Erdkollektor aus biegsamen Kunststoffrohren bekannt, der vertikal stehend in einem Graben verlegt wird.

In der DE 20 2006 019 426 U1 ist ebenfalls ein Erdkollektormodul aus Kunststoffrohren offenbart, der auf einem Träger montiert in einen gefrästen Schlitz eingebracht wird.

Ein gattungsgemässes Verfahren zum Einbau eines flächigen Kollektors geht aus DE 10 2006 061065 A1 hervor.

Aufgabe der Erfindung ist es, den Einbau von Erdkollektoren schnell und kostengünstig zu ermöglichen.

Diese Aufgabe wird erfindungsgemäß durch ein Verfahren der eingangs genannten Art mit den Merkmalen von Patentanspruch 1 und durch eine Vorrichtung gemäß Patentanspruch 3 gelöst. Günstige Ausgestaltungsformen sind Gegenstand von Unteransprüchen.

Bei einem Verfahren zum Einbau eines flächigen Erdkollektors werden nacheinander folgende Schritte ausgeführt. Zunächst wird mittels einer Fräse ein Schlitz im Erdreich hergestellt. Dann wird der Erdkollektor in stehender Position In den Schiltz eingebracht. Nach der Entnahme wird das Erdreich hinsichtlich seiner Konsistenz bearbeitet und anschließend das restliche Volumen des Schlitzes wieder mit dem bearbeiteten Erdreich verfüllt. Hierbei kann der flächige Erdkollektor eine starre, biegesteife Konstruktion aus festen Leitungen für den Wärmeträger aufweisen oder auch in Form eines Erdkollektormoduls vorliegen, dessen Leitungen für den Wärmeträger aus einem fortlaufenden flexiblen Rohr bestehen, die auf einem ebenen Träger aufgebracht sind.

Weiterhin sieht die Erfindung beim Einbau von flächigen Erdkollektoren ein Verfahren den folgenden Schritten vor: Zunächst wird mittels einer Fräse ein Schlitz im Erdreich hergestellt. In diesen Schlitz wird der hängende Erdkollektor in aufgerichteter Form eingebracht und mittels Haltevorrichtung im anstehenden Erdreich fixiert. Nach der Fixierung des Erdkollektors wird das restliche Volumen des Schlitzes wieder mit dem beim Fräsvorgang entnommenen Erdreich verfüllt.

Außerdem sieht die Erfindung ein Verfahren zum Einbau eines linienförmigen Erdkollektors vor: Hierbei kann es sich beispielsweise um Erdsonden handeln, die horizontal verlegt werden. Während mittels einer Grabenfräse ein Schlitz im Erdreich hergestellt wird, wird gleichzeitig der Erdkollektor auf die Schlitzsohle verlegt. Nach dem Fräs- und Verlegevorgang wird das beim Fräsvorgang entnommene Erdreich hinsichtlich seiner Konsistenz bearbeitet und der Schlitz wieder mit dem bearbeiteten Erdreich verfüllt. Von Vorteil ist dabei, wenn der linienförmige Erdkollektor mittels einer Rollenvorrichtung direkt über die Grabenfräse eingebracht wird.

Trotz des Fräsvorgangs können mit dem Erdreich auch faustgroße Steine mitgefördert werden. Vorteilhafterweise wird das Erdreich daher vor dem Wiedereinbringen in den Schlitz zerkleinert und/oder gesiebt. Weiterhin ist es von Vorteil die Konsistenz des einzubringenden Erdreichs mittels Zugabe von Flüssigkeit und /oder Zusatzstoffen einzustellen. Hierbei sind Bereiche entsprechend der Ausbreitmaßklasse F1 bis F6 von Beton möglich. Vorzugsweise liegt die Konsistenz des einzubringenden Erdreichs im Bereich sehr weich, fließfähig oder sehr fließfähig. Hierdurch wird ermöglicht, das entnommene Erdreich mittels einer Schneckenpumpe wieder in den Schlitz einzubringen, wodurch eine beträchtliche Verkürzung des Verfüllvorgangs erzielt werden kann. Zur Verbesserung der Pumpfähigkeit kann auch ein Gleitmittel hinzugefügt werden. Gerade bei weicher, breiiger, fließfähiger oder sehr fließfähiger Konsistenz des Erdreichs wird zudem gewährleistet, dass der Erdkollektor ohne Luft oder Gesteinseinschlüsse vom Erdreich umgeben ist, so dass eine gute Wärmeübertragung ermöglicht wird. Vorzugsweise wird eine Konsistenzzahl (Iₑ) kleiner 0,75, besonders bevorzugt kleiner 0,5 eingestellt.

Vorzugsweise wird das eingebrachte Erdreich nach dem Einbringen verdichtet. Dies geschieht vorzugsweise ähnlich wie bei Betoniervorgängen mittels eines Rüttlers, der Vibrationen erzeugt, so dass Lufteinschlüsse ausgetrieben werden und ein dichtes Gefüge mit wenigen Poren entsteht. Rütteln, Stampfen oder Stochern sind je nach Boden konsistenz geeignete Verdichtungsverfahren. Als Verdichtungsgerät kommt dabei vorzugsweise ein Innenrüttler zur Anwendung.

Vorzugsweise liegt bei flächigen Erdkollektoren, die einen Träger umfassen, die Trägerseite des Erdkollektormoduls vor dem Wiederverfüllen des Schlitzes an einer Wand des Schlitzes an. Gerade bei flächigen Trägermateriallen wird dadurch gewährleistet, dass der Schlitz nur auf einer Seite des Erdkollektormoduls verfüllt und gegebenenfalls verdichtet werden muss, was wiederum zu kurzen Einbauzeiten beiträgt.

Eine Weiterbildung des Erfindung sieht vor, dass die Schrittfolge der Verfahrensschritte beim Einbau der Erdkollektoren in wenigstens zwei parallel oder hintereinander angeordneten Schlitzen jeweils zeitlich versetzt vorgesehen ist. Während der Fräsvorgang nach dem Fräsen eines ersten Schlitzes sofort an einem oder mehreren weiteren Schlitzen fortgesetzt wird, kann das bei den später gefrästen Schlitzen entnommene Erdreich sofort zur Verfüllung der ersten Schlitze, in die die Erdkollektoren bereits eingebracht sind, verwendet werden. Dadurch erübrigen sich der Wegtransport und die Lagerhaltung für entnommenes Erdreich.

Weiterhin wird mit der Erfindung eine Erdkollektorvorrichtung mit einer Haltevorrichtung für Erdkollektoren in Erdschlitzen bereitgestellt. Diese Haltevorrichtungen werden bei flächigen Erdkollektoren benötigt, um ein Kippen oder Verkanten der Erdkollektoren im Schlitz zu verhindern. Einige Erdkollektoren weisen aufgrund ihrer Bauart oder ihrer Trägerkonstruktion in aufgerichteter Position keine ausreichende Steifigkeit über ihre Einbauhöhe auf, so dass sie sich unter ihrem Eigengewicht verformen würden. Dies ist beispielsweise bei Erdkollektormodulen, bei denen die Leitungen für die Wärmeträger aus flexiblen Kunststoffrohren bestehen und die einen Träger aus auflösbarem Material, beispielsweise Pappe aufweisen, der Fall.

Üblicherweise werden diese Erdkollektoren hängend in die vorgesehenen Erdschlitze eingebaut. Vor oder nachdem die Erdkollektoren Bodenkontakt haben, können die Haltevorrichtungen in die Schlitze eingeführt werden. Die Haltevorrichtungen umfassen ein Stabilisierungsrohr, das am unteren Ende eine Spitze aufweist und einen höhenverschieblichen Halteanker, der eine Hülse und einen Haltewinkel aufweist. Je nach Länge des Erdkollektors werden die Haltevorrichtungen in bestimmten Abständen in den Schlitz eingeschoben und befestigt. Bei Erdkollektormodulen mit Trägem werden die Haltevorrichtungen beispielsweise an einen der Träger oder auf der der Trägerseite gegenüberliegenden Seite der Kunststoffrohre gegen den Erdkollektor gedrückt.

Mit der unteren Spitze, wird die Haltevorrichtung im Boden positioniert. Anschließend wird der höhenverschiebliche Halteanker über das Stabilisierungsrohr geschoben und mit seinem abgewinkelten Enden in das anstehende Erdreich gepresst. Damit ist der Erdkollektor gegenüber der Schlitzwand fixiert und der Schlitz kann wieder verfüllt werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Anhand der Figuren soll die Erfindung näher beschrieben werden.
- Fig. 1: zeigt eine Ansicht eines Erdkollektors mit elastischen Kunststoffrohren, die auf einem Träger aus auflösbarem Material fixiert sind
- Fig. 2: zeigt eine alternative Bauform eines Erdkollektors
- Fig. 3: zeigt schematisch mehrere Verfahrensschritte beim Einbau von Erdkollektoren

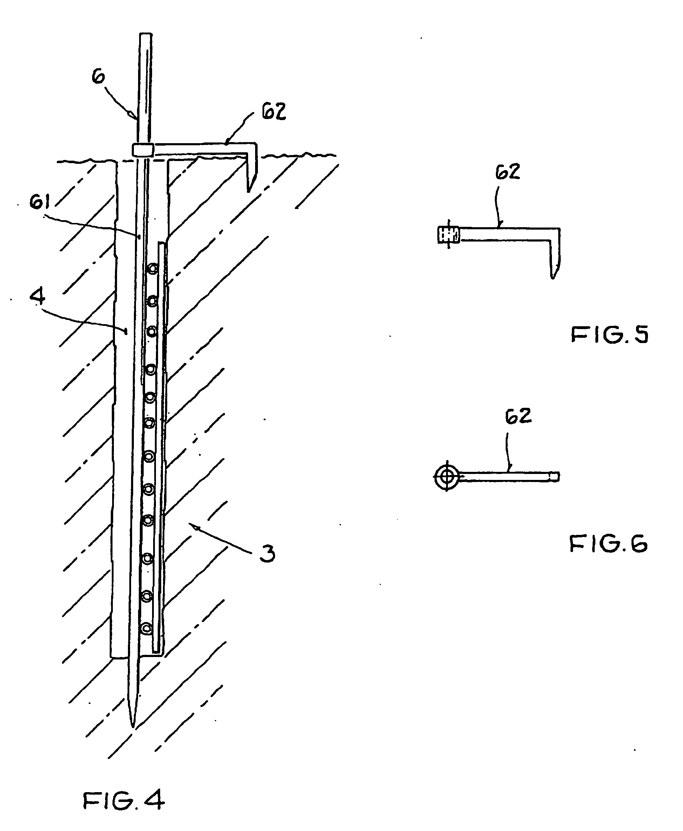

- Fig. 4: zeigt eine Haltevorrichtung
- Fig. 5: zeigt einen Schnitt durch einen Halteanker
- Fig. 6: zeigt eine Draufsicht auf einen Halteanker

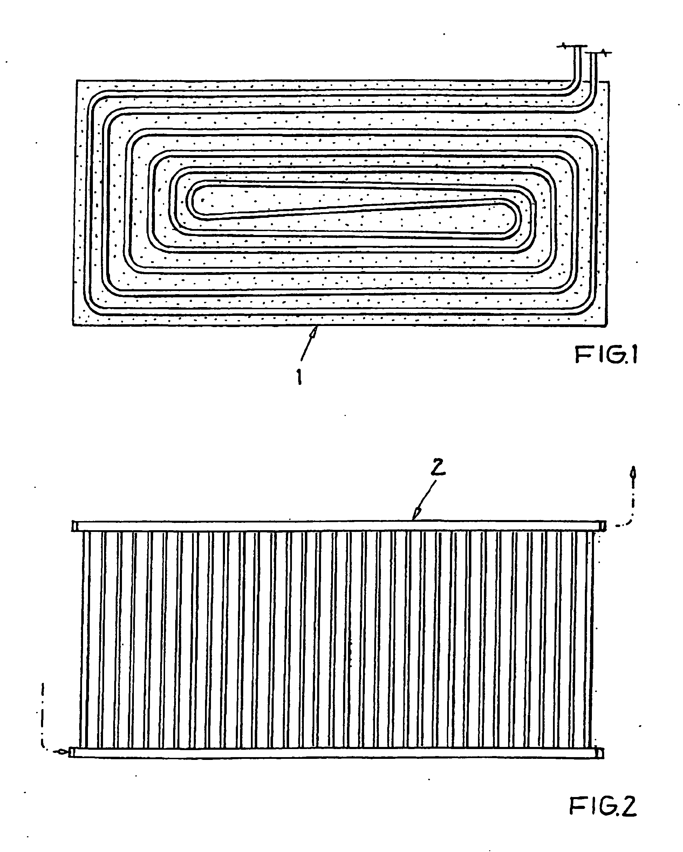

Figur 1 zeigt eine Ansicht eines Erdkollektors 1 mit elastischen Kunststoffrohren, die auf einem Träger aus auflösbarem Material fixiert sind. Vorzugsweise besteht der Träger aus Pappe, an der die Kunststoffrohre befestigt sind. Diese Erdkollektormodule werden in unterschiedlichen Abmessungen hergestellt. Im Gegensatz dazu zeigt Figur 2 eine alternative Bauart eines Erdkollektors 2, der aus starren Rohren besteht, so dass der Erdkollektor 2 insgesamt über seine Einbauhöhe stabil ist. Unter Erdkollektoren werden dabei alle Systeme verstanden, die der Erde Energie sei es in Form von Wärme oder Kälte entziehen.

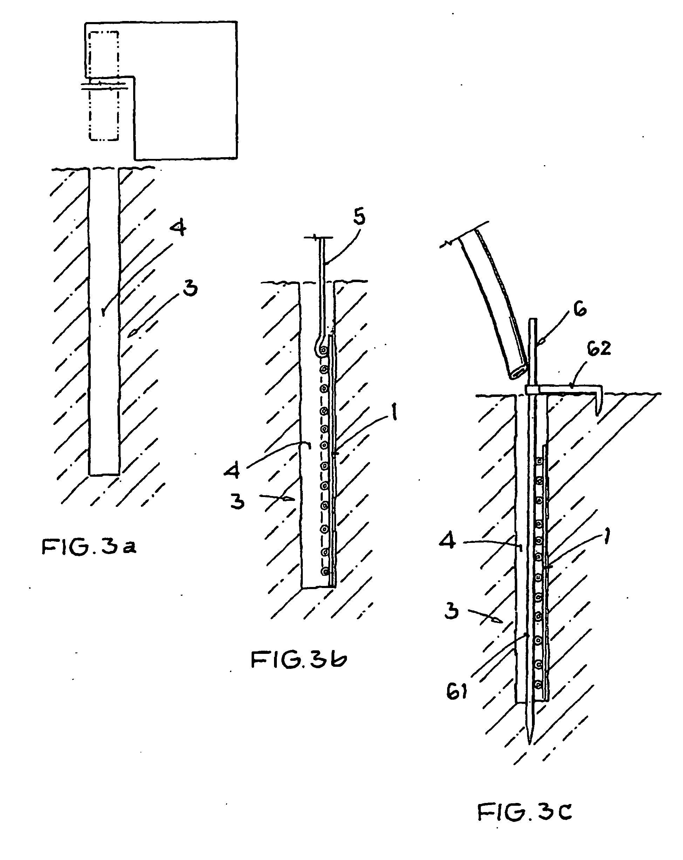

Figur 3 zeigt schematisch mehrere Verfahrensschritte beim Einbau von Erdkollektoren 1, 2. Erdkollektoren 1, 2 liegen in unterschiedlichen Abmessungen vor. Bevorzugte Abmessungen sind dabei Höhen von 0,5 Metern oder 2 Metern und Längen von bis zu 5 Metern, wobei eine Vielzahl von Kollektoren hintereinander eingebaut werden kann. Aus den Abmessungen ergeben sich ebenfalls die Maße der Schlitze 4 im Erdreich 3. Um Schlitze 4 möglichst erschütterungsfrei herzustellen, ist es von Vorteil diese mit einer Grabenfräse in das Erdreich 3 zu fräsen. Hierbei haben sich unter anderem Fräsen mit Meiselketten, die eine Vielzahl von Carbonmelseln aufweisen, bewährt.

Mit Hilfe der Fräse ist es möglich, bei unterschiedlichen Bodenarten innerhalb kürzester Zeit Schlitze 4 mit den erforderlichen Abmessungen herzustellen. Das beim Fräsen geförderte Erdreich 3 wird vorteilhafterweise direkt an der Einbaustelle der Erdkollektoren zerkleinert und für das Verfüllen der Schlitze 4 gelagert und/oder aufbereitet.

Die Erdkollektoren 1, 2 können an Haken oder Schlaufen hängend in die schmalen Schlitze 4 eingelassen werden. Aus diesem Grund kann die Breite der Schlitze minimiert werden. Die Schlitzbreiten liegen somit in einem Bereich von kleiner gleich 15 cm. Daraus ergibt sich der Vorteil, dass keine Abstütz- oder Sicherungsmaßnahmen im Einbaubereich getroffen werden müssen. Auch die Aushubmenge des Erdreichs 3 reduziert sich dadurch erheblich gegenüber Schlitzen, die mit Hilfe von Baggern gegraben werden müssen.

Während die Erdkoliektoren 1 ,2 an den Haken oder Schlaufen hängen, werden sie bis auf den Boden des Schlitzes 4 herabgelassen. Daraufhin werden die Erdkollektoren 1 mit Haltevorrichtungen 6, die einerseits Stabilisierungsrohre 61 und andererseits Halteanker 62 umfassen, positioniert.

Bei Erdkollektoren 1, die einen Träger umfassen, wird dieser mit einem Stabilisierungsrohr 61 gegen die Wand des Schlitzes gepresst und zwar derart, dass der Träger an der Wand des Schlitzes 4 anliegt. Je nach Länge des Erdkollektors 1 werden mehrere Haltevorrichtungen 6 bzw. Stabillsierungsrohre 61 verwendet. Anschließend werden die Halteanker 62, die eine Hülse und einen Haltewinkel aufweisen, auf die Stabilisierungsrohre 61 aufgeschoben und mit dem abgewinkelten Ende des Halteankers 62 in das Erdreich 3 gepresst. Damit ist der Erdkollektor 1 fixiert und liegt einseitig an einer Schlitzwand an.

Da das geförderte Erdreich 3 nicht pumpbar ist, wird es zwischenzeitlich zerkleinert und mittels Wasser und / oder Zusatzmitteln hinsichtlich seiner Konsistenz insbesondere durch Mischen mittels einer Mischvorrichtung aufbereitet. Die Konsistenz wird so gewählt, dass das Erdreich 3 ohne wesentliches Entmischen wieder mit einer Schneckenpumpe in den Schlitz eingebracht werden kann. Daher ist die Mischvorrichtung in unmittelbarer Nähe zum Schlitz angeordnet. Vorteilhafterweise ist die Konsistenz des einzubringenden Erdreichs 3 plastisch (Ausbreitmaß 350-410 mm), weich (Ausbreitmaß 420-480 mm), sehr welch (Ausbreitmaß 490-550 mm) fließfähig (Ausbreitmaß 560-620 mm) oder sehr fließfähig (Ausbreitmaß größer 630 mm) entsprechend Beton. Durch die Wiederverwertung des Erdreichs werden die Kosten für die Bewegung von Erdreich reduziert. Zudem führt die Wiederverwendung des Erdreichs zum Füllen des Schlitzes zu keiner Umweltbelastung oder Umweltbeeinflussung.

Je nach Konsistenz kann das Erdreich 3 nach dem Einbringen noch mit einem Rüttler verdichtet werden, so dass Lufteinschlüsse im Bereich der Kunststoffrohre vermieden und eine gute Wärmeübertragung sichergestellt wird.

Nach dem Einbringen des Erdreichs 3 können die Haltevorrichtungen 6 des Zwischenprodukts der Erdkollektorvorrichtung wieder entfernt werden. Da diese vorzugsweise aus Holz, Bambus, Stahl oder Aluminium bestehen und vorzugsweise eine glatte Oberfläche aufweisen, können diese auch bei großen Längen von ca. 4 Metern noch leicht herausgezogen werden. Das noch fließfähige Erdreich 3 füllt die zunächst verbleibende durch die entnommene Haltevorrichtung erzeugte Lücke auf.

Um einen schnellen Verfüllvorgang zu gewährleisten ist es von Vorteil, die Förderwege für das Erdreich 3 kurz zu halten und beispielsweise die Schneckenpumpen, die gleichzeitig Mischeinrichtungen für Erdreich und Wasser bzw. Erdreich und Zusatzmittel umfassen, verfahrbar entlang der Erdschlitze anzuordnen.

Vorteilhafterweise liegen die Anschlüsse für die Verbindungen zwischen Erdkollektor 1, 2 und Wärmepumpe im oberen Bereich des Erdkollektors 1, 2. Beim Verfüllvorgang kann dann zunächst bis zu den Anschlüssen verfüllt werden. Die Erdkollektoren 1 ,2 sind dann schon ausreichend im Erdreich 3 stabilisiert. Nach der Fertigstellung der Anschlüsse kann bis zur Oberfläche des anstehenden Erdreichs 3 aufgefüllt werden. Durch diese mögliche Schrittfolge kann zusätzlicher späterer Aufwand für das Graben von Zuleitungen o.ä. vermieden werden.

Insgesamt sind somit mit dem erfindungsgemäßen Verfahren sehr kurze Einbauzeiten für linienförmige und flächige Erdkollektoren 1, 2 erreichbar.

### Bezugszeichenliste

- 1: Erdkollektor mit biegeweichem Träger
- 2: Erdkollektor mit steifer Tragkonstruktion
- 3: Erdreich
- 4: Schlitz
- 5: Haken, Schlaufen
- 6: Haltevorrichtung
61 Stabilisierungsrohr
62 Halteanker

## Patentansprüche

1. Verfahren zum Einbau eines flächigen Erdkollektors (1, 2) mit den Schritten:
- Herstellen eines Schlitzes (4) im Erdreich (3) mittels einer Grabenfräse;
- Einbringen des Erdkollektors (1, 2) in den Schlitz (4) In stehender Position;
- Bearbeiten des beim Fräsvorgang entnommenen Erdreichs vor einem Verfüllen des Schlitzes (4), indem die Konsistenz des entnommenen Erdseichs durch Zugabe von Flüssigkeit und/oder Zusatzstoffen eingestellt wird;
- Verfüllen des Schlitzes (4) mit dem bearbeiteten Erdseich nach der Einstellung der Konsistenz des bearbeiteten Erdseichs.

2. Verfahren nach Anspruch 1,
- bei dem der Erdkollektor (1, 2) mittels einer Haltevorrichtung (6) stabilisiert und / oder fixiert wird.

3. Erdkollektorvorrichtung, ins Erdseich eingebaut mittels eines Verfahrens nach Anspruch 1, mit einem ins Erdseich (3), gefrästen Schlitz (4),
- mit einem in stehender Position In den Schlitz (4) angeordneten Erdkollektor (1,2),
- mit einer Haltevorrichtung (6) zur Stabilisierung und/oder Fixierung des Erdkollektors (1,2) im Schlitz (4), und
- mit einer Füllung des Schlitzes (4) aus hinsichtlich seiner Konsistenz bearbeitetem Erdreich.

4. Erdkollektorvorrichtung nach Anspruch 3,
- bei der die Haltevorrichtung (6) ein Stabilisierungsrohr (61) aufweist, das am unteren Ende eine Spitze aufweist, und
- bei der die Haltevorrichtung (6) einen höhenverschieblichen Halteanker (62) aufweist, der eine Hülse und einen Haltewinkel aufweist.

## Claims

1. Method of installing an areal ground collector (1, 2) by the steps:
- producing a slot (4) in the soil (3) by means of trench cutter;
- introducing the ground collector (1, 2) into the slot (4) in upright position;
- processing the soil, which was removed during the cutting process, before filling the slot (4) in that the consistency of the removed soil is adjusted by addition of liquid and/or additives; and
- filling the slot (4) with the processed soil after adjustment of the consistency of the processed soil.

2. Method according to claim 1,
- in which the ground collector (1, 2) is stabilised and/or fixed by means of a holding device (6).

3. Ground collector device installed in soil by means of a method according to claim 1,
- with a slot (4) cut into the soil (3),
- with a ground collector (1, 2) arranged in an upright position in the slot (4),
- with a holding device (6) for stabilising and/or fixing the ground collector (1, 2) in the slot (4) and
- with filling of the slot (4) with soil processed with respect to the consistency thereof.

4. Ground collector device according to claim 3,
- in which the holding device (6) comprises a stabilising tube (61) having a spike at the lower end and
- in which the holding device (6) comprises a holding anchor (62) which is displaceable in height and which comprises a sleeve and a retaining angle member.

## Revendications

1. Procédé pour l'installation d'un collecteur plat de sol (1,2) comprenant les étapes suivantes :
. réalisation d'une tranchée (4) dans la terre (3) à l'aide d'une fraise à creuser des tranchées;
. pose du collecteur à enterrer (1,2) dans la tranchée (4) en position debout;
. traitement de la terre enlevée lors de l'étape de fraisage avant le remplissage de la tranchée (4), dans lequel la consistance de la terre enlevée est obtenue par addition de liquide et/ou de matière ;
. remplissage de la tranchée (4) avec la terre traitée après l'obtention de la consistance de la terre traitée.

2. Procédé selon la revendication 1 **caractérisé en ce que** le collecteur de sol (1,2) est stabilisé et/ou fixé par un dispositif de maintien (6).

3. Ensemble de collecteur de sol inséré dans la terre par un procédé selon la revendication 1 avec :
. une tranchée (4) fraisée dans la terre,
. un collecteur de sol (1,2) installé en position debout dans la tranchée (4),
. un dispositif de maintien (6) pour la stabilisation ou la fixation du collecteur de sol (1,2) dans la tranchée (4),
. un remplissage de la tranchée (4) par de la terre dont la consistance est traitée.

4. Ensemble de collecteur de sol inséré dans la terre selon la revendication 3 selon lequel le dispositif de maintien (6)
. comporte un tube stabilisateur (61) qui présente une pointe à son extrémité inférieure,
. comporte un crochet d'ancrage (62) qui présente une douille et une équerre d'ancrage.
